# EUROPEAN PATENT APPLICATION

(11) **EP 2 302 227 A1**
(43) Date of publication of application: **30.03.2011**
(21) Application number: 09797923.1
(22) Date of filing: 14.07.2009
(51) Int. Cl.: F16B 13/06

(54) **SCREW GROMMET**

(30) Priority: 16.07.2008 JP 2008185116; 18.03.2009 JP 2009066797
(71) Applicant: Nifco INC., Yokohama-shi, Kanagawa 244-8522 (JP)
(72) Inventor: SANBONMATSU, Toru, Yokohama-shi Kanagawa 244-8522 (JP)
(74) Representative: Gassner, Wolfgang
(86) International application number: PCT/JP2009/062760
(87) International publication number: WO 2010/007998

(57) **Abstract**

A plastic screw grommet includes a head portion and a leg portion having an end portion which is moved to a head portion side due to a screw advancing operation of a screw body inserted from the head portion side. The plastic screw grommet is structured so as to expand an intermediate portion by inserting the end portion, which is moved to the head portion side, into an inside of the intermediate portion of the leg portion between the end portion and the head portion. An outer surface of the end portion contacting an inner surface of an expanded portion of the intermediate portion at a time of the expansion is structured so as to have a shape following the inner surface of this expanded portion.

## Description

### Field of Technology

This invention relates to an improvement of a screw grommet which is structured so as to be fastened to objects by expanding one portion due to a screw advancing operation of a screw body after one portion of the screw body is inserted into attachment bores formed in the objects, and so as to release this fastening by releasing this expansion due to a screw retracting operation of such screw body.

### Background Art

There is a screw grommet structured by a main body comprising a hollow axis portion, and a hollow plug body connected to this main body through a thin-walled portion. (Refer to Patent Document 1) In such screw grommet, after the axis portion of the main body passes through an attachment bore of a plate-like member, the above-mentioned plug body is pulled in to a head portion side by screwing a screw into the main body from a flange side of this main body, so that the above-mentioned axis portion is expanded so as to be fastened to the above-mentioned plate-like member. However, in such screw grommet, the plug body only allows this axis portion to expand by simply pushing the axis portion by one portion of the outside of the plug body from the inward, so that a little gap is produced between the plug body and an expanded portion of the axis portion. Also, for this reason, in such screw grommet, when a force acts along a plate surface direction of the above-mentioned plate-like member, wobbling can easily occur due to this gap.

### Prior Art Document

### Patent Document

Patent Document 1: Japanese Patent Application Laid-Open Publication No. H04-72082

### Summary of the Invention

### Problems to be Solved by the Invention

A main problem which the present invention attempts to solve is to further improve the fastened state in this kind of screw grommet.

### Means for Solving the Problems

In order to solve the above-mentioned problem, in the present invention, a screw grommet includes a head portion, and a leg portion comprising an end portion which is moved to a head portion side due to a screw advancing operation of a screw body inserted from this head portion side. The screw grommet is structured so as to allow an intermediate portion to expand by inserting the end portion which is moved to the head portion side into an inside of the intermediate portion of the leg portion between this end portion and the head portion. At a time of the above-mentioned expansion, an outer surface of the end portion contacting an inner surface of an expanded portion of the intermediate portion is structured so as to have a shape following the inner surface of this expanded portion.

More specifically, at the time of the expansion of the intermediate portion of the leg portion, the outer surface of the end portion contacting the inner surface of the expanded portion of this intermediate portion is formed so as to be a curved surface having a curvature following the curvature of the inner surface of this expanded portion.

After the leg portion is inserted into attachment bores of objects comprising the attachment bores for the leg portion of the screw grommet, when the screw advancing operation of the screw body is carried out, the end portion is moved in a direction approaching the head portion side, and the intermediate portion is expanded by being pushed by the end portion which is moved in this manner from the inside. Thereby, the screw grommet is fastened to the objects by sandwiching the objects between the head portion thereof and the expanded portion. In this fastened state, since the outer surface of the end portion has a shape following the inner surface of the expanded portion of the intermediate portion, both surfaces can be contacted with the surfaces along a direction of an axis line of the leg portion so as not to produce a gap between both surfaces as much as possible. Thereby, even in such a case that a force in a direction intersecting with such axis line is acted on the objects, typically, even when the force in the above-mentioned direction is acted on one of two objects or both of the objects which are fastened to each other through the screw grommet, one of the objects or both of the objects can be prevented from moving in the direction of this force. Also, the fastening with little wobbling of such objects can be completed. In the screw grommet, at least the intermediate portion may be expanded as mentioned above, and typically, it is practical to make the whole screw grommet made of a plastic material. However, the end portion may be metallic and the like, so that the whole screw grommet may not have to be structured by the same materials.

The intermediate portion of the above-mentioned leg portion is divided into multiple piece portions by slits along the direction of the axis line of the leg portion. Also, guide portions which are inserted into the slits and guided may be formed in the end portion.

Even in the above-mentioned case, the associated turning of the end portion with the screw body is prevented by the above-mentioned guide portions, so that only the movement by being guided by the above-mentioned slits is allowed. Accordingly, the end portion is gradually moved toward the head portion side due to the screw advancing operation of the screw body, so that the intermediate portion is expanded.

If a female screw corresponding to a male screw of the screw body is formed on an inside of the above-mentioned end portion, due to the above-mentioned screw advancing operation, the end portion can be smoothly inserted into the inside of the intermediate portion.

### Effect of the Invention

The screw grommet according to the present invention can prevent an unnecessary gap from being formed between the end portion which allows the intermediate portion of the leg portion to expand, and this intermediate portion at a time of the expansion of this intermediate portion, so that the fastened state is improved.

### Brief Description of the Drawings

Fig. 1 is a perspective view of a basic structural example of a screw grommet.
Fig. 2 is a perspective view of the basic structural example of the screw grommet.
Figs. 3(a), 3(b), 3(c), 3(d) are a front view (Fig. 3(a)), a right side view (Fig. 3(b)), a plan view (Fig. 3(c)), and a bottom view (Fig. 3(d)) of the basic structural example of the screw grommet.
Fig. 4 is a cross sectional view showing a usage state of the basic structural example of the screw grommet. (A state before an expansion of an intermediate portion)
Fig. 5 is a cross sectional view showing the usage state of the basic structural example of the screw grommet. (A state after the expansion of the intermediate portion)
Fig. 6 is a perspective structural view of a variation (first example) of the screw grommet.
Fig. 7 is a cross sectional structural view of a variation (second example) of the screw grommet. (The state before the expansion of the intermediate portion)
Fig. 8 is a cross sectional structural view of a variation (third example) of the screw grommet. (The state before the expansion of the intermediate portion)
Fig. 9 is a perspective structural view of a variation (fourth example) of the screw grommet.
Fig. 10 is a cross sectional structural view of a variation (formation example of inhibiting means) of the screw grommet. (The state after the expansion of the intermediate portion)
Fig. 11 is a perspective structural view of a variation (modified example of a shape of a leg portion) of the screw grommet.
Fig. 12 is a perspective structural view of a variation (modified example of the shape of the leg portion) of the screw grommet.

### Best Modes of Carrying out the Invention

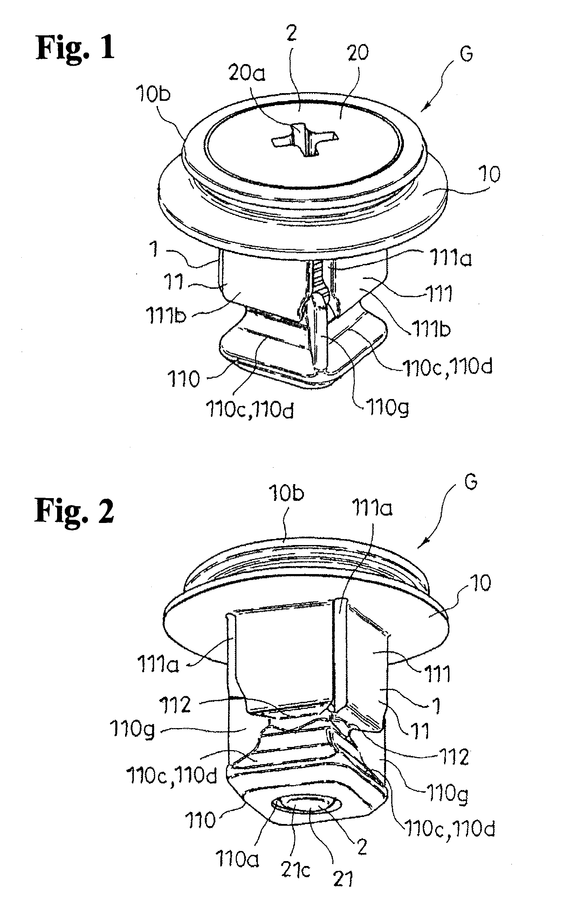

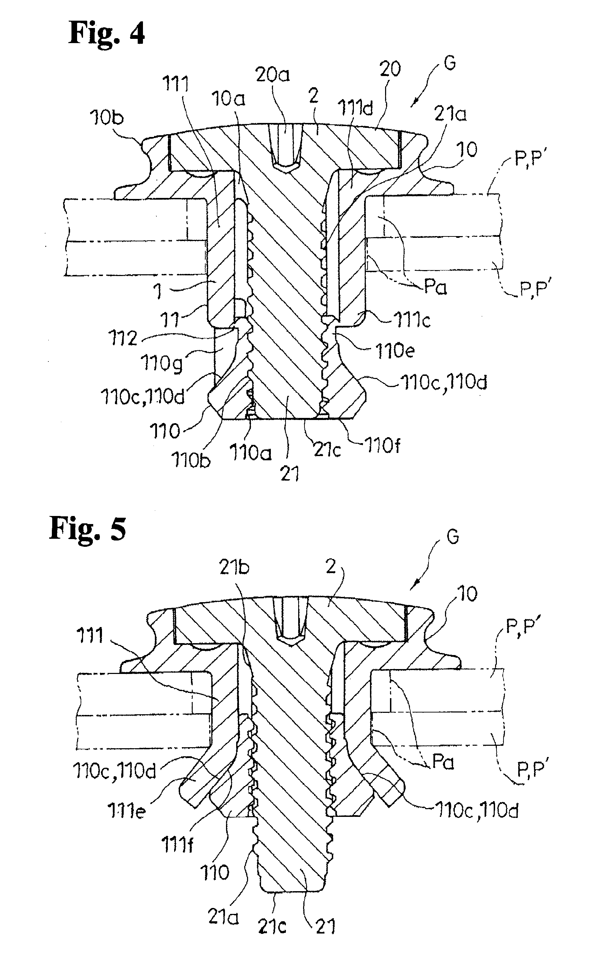

Hereinafter, the best mode for implementing the present invention will be explained with reference to Figs. 1 to 12. Incidentally, here, Figs. 1 to 5 respectively show a basic structural example of a screw grommet G structured by applying the present invention, and especially, Fig. 5 shows a condition in which two sheets of plate-like bodies P', P' are fastened to each other by elastically expanding an intermediate portion 111 of a grommet main body 1 structuring the screw grommet G.

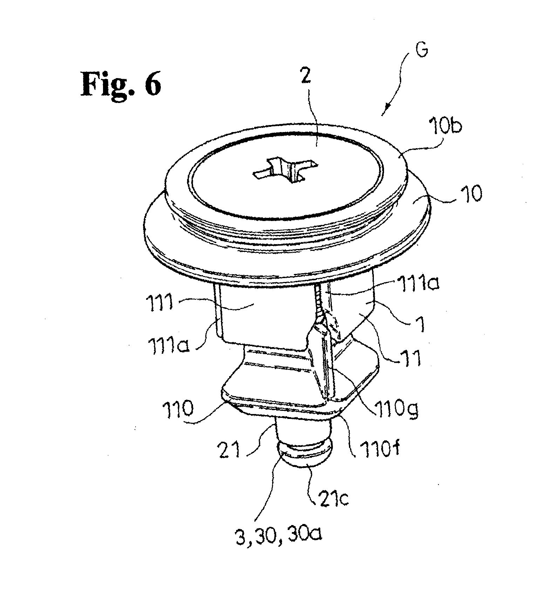

Figs. 6 to 12 respectively show one portion of a variation of the screw grommet G structured by modifying one portion of the above-mentioned basic structural example. Main specific modified portions are summarized as follows.

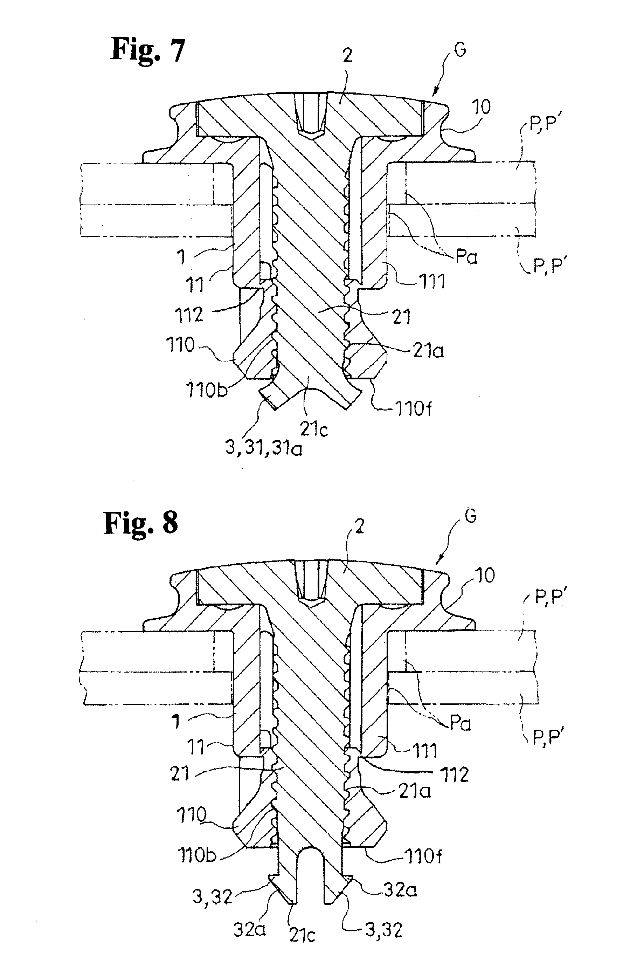

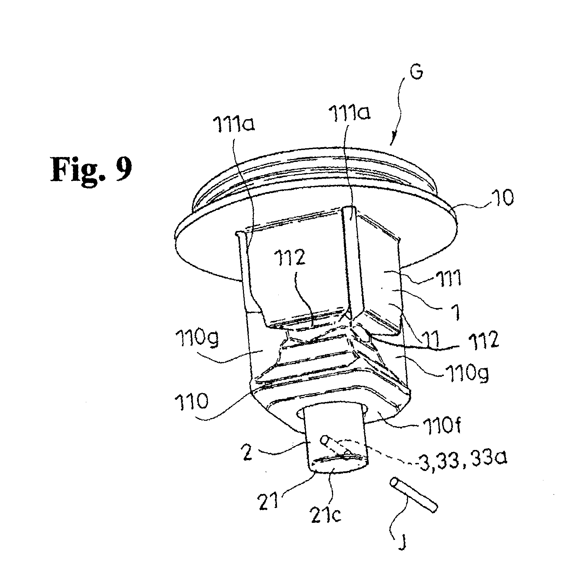

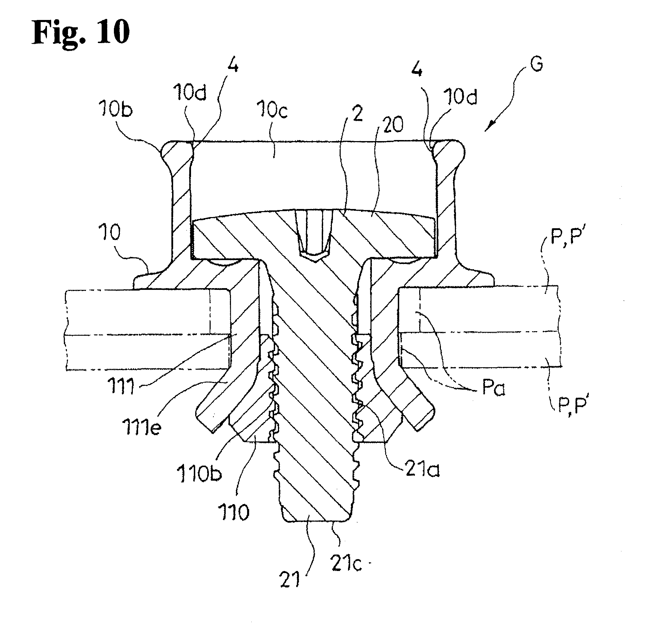

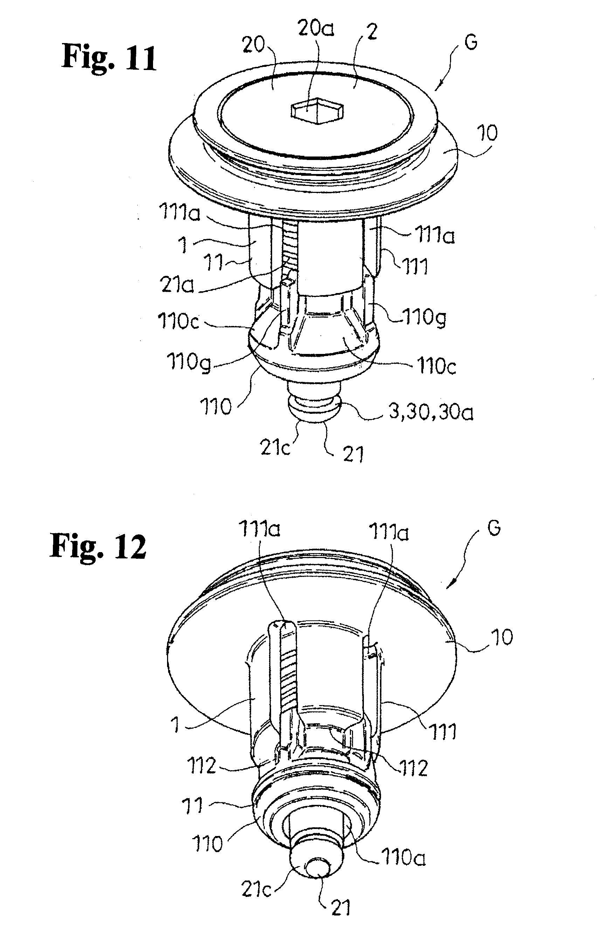

A variation shown in Fig. 6: Extension of an axis 21 of a screw body 2 and formation of blocking means 3.
A variation shown in Fig. 7: The extension of the axis 21 of the screw body 2 and the formation of the blocking means 3.
A variation shown in Fig. 8: The extension of the axis 21 of the screw body 2 and the formation of the blocking means 3.
A variation shown in Fig. 9: The extension of the axis 21 of the screw body 2 and the formation of the blocking means 3.
A variation shown in Fig. 10: Formation of inhibiting means 4 to the grommet main body 1.
Variations shown in Figs. 11, 12: Modifications of outlines of a leg portion 11 of the grommet main body 1.

The screw grommet G according to the present embodiment is structured so as to be fastened to objects P by expanding one portion of the screw grommet G due to a screw advancing operation of the screw body 2 after one portion of the screw body 2 is inserted into attachment bores Pa formed in the objects P, and so as to release this fastening by releasing this expansion due to a screw retracting operation of such screw body 2.

Typically, such screw grommet G is used for fastening two or above members where the above-mentioned attachment bores Pa are formed in a penetrated state, typically, the two sheets of plate-like bodies P', P' where such attachment bores Pa are formed. In this case, after such two sheets of plate-like bodies P', P' are overlaid in such a way that the attachment bores Pa communicate each other, one portion of the screw grommet G is inserted into both attachment bores Pa, Pa, and this one portion is expanded as mentioned above, so that such two sheets of plate-like bodies P', P' can be connected through the screw grommet G. (Fig. 5)

Such screw grommet G includes the grommet main body 1 comprising a head portion 10 and the leg portion 11. In the illustrated examples, the screw grommet G is structured by combining the screw body 2 producing the above-mentioned expansion due to the above-mentioned screw advancing operation to such grommet main body 1 beforehand. In the illustrated examples, one portion of the leg portion 11 is expanded due to the screw advancing operation of such screw body 2 after the leg portion 11 of the grommet main body 1 is inserted into the attachment bores Pa formed with a size where the head portion 10 of the grommet main body 1 cannot be inserted, so that such screw grommet G is fastened to the objects P by sandwiching the objects P between one portion of such expanded leg portion 11 and the head portion 10 from two faces (or front and back, inside and outside, up and down, or right and left). In the illustrated examples, in order to provide such an expansion function for the grommet main body 1, such grommet main body 1 is made of plastic. The screw body 2 comprises a screw head 20 and the axis 21 having a male screw 21a, and typically, is made of plastic or metal.

In the illustrated examples, such screw body 2 is structured by the discoid screw head 20 and the axis 21 wherein an axis base portion 21b is integrally connected in the center of one face side of this screw head 20. On the other face side of such screw head 20, an operating bore 20a, where an end of a tool such as a driver and the like is housed, is formed.

On the other hand, in the illustrated examples, in the grommet main body 1, the head portion 10 is discoid, and the leg portion 11 is structured so as to have a hollow angular tube shape. The leg portion 11 is structured thinner than an outer diameter of the head portion 10. The leg portion 11 integrally connects one tube end in the center of one face side of the head portion 10. In the head portion 10, a through-bore 10a communicated with an inside of the leg portion 11 connected to the head portion 10 in this manner, is formed. On the other face side of the head portion 10, a circling rising portion 10b is formed by positioning such through-bore 10a on the inside. An inner diameter of this circling rising portion 10b is approximately equal to a diameter of the screw head 20 of the screw body 2. The screw body 2 is assembled to the grommet main body 1 by inserting the axis 21 into the leg portion 11 through the through-bore 10a of the head portion 10 in such a way that the screw head 20 is housed inside this circling rising portion 10b. Incidentally, as shown in Figs. 11, 12, in such grommet main body 1, the leg portion 11 may be structured so as to have a hollow cylindrical shape.

The leg portion 11 of the grommet main body 1 is divided into an end portion 110 and the intermediate portion 111. The end portion 110 is structured so as to be moved to a head portion 10 side due to the screw advancing operation of the screw body 2 which is inserted from the above-mentioned head portion 10 side. The intermediate portion 111 is located between such end portion 110 and the head portion 10 and structured so as to be expanded by inserting the end portion 110, which is moved to the head portion 10 side due to this screw advancing operation, into the inside.

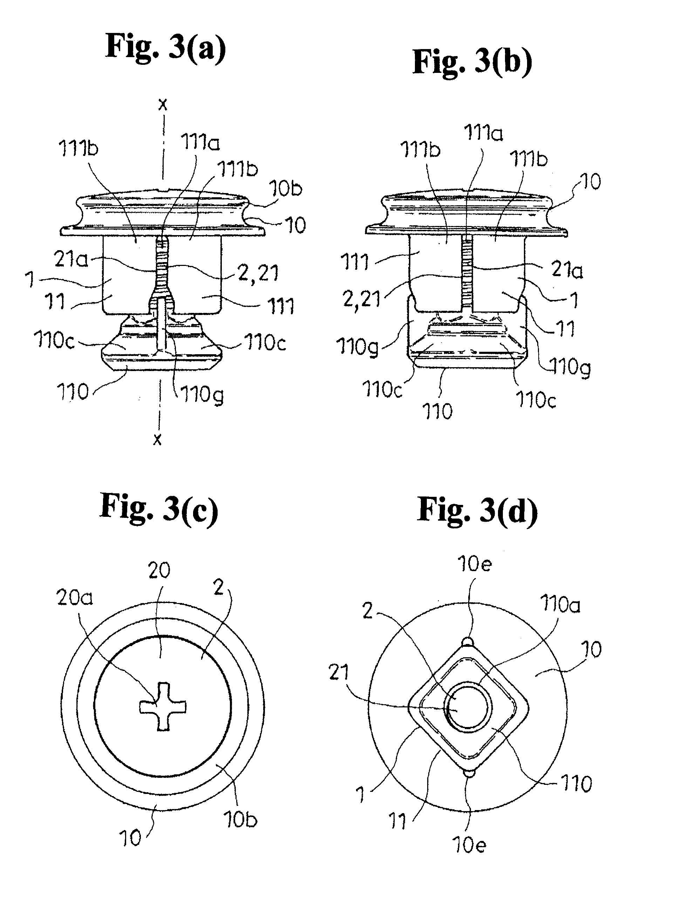

In the illustrated examples, the intermediate portion 111 is structured such that both inner and outer surfaces comprise an approximately square outline in cross-sectional surfaces in a direction orthogonal to an axis line x (Fig. 3(a)/a central line) of the leg portion 11. The inside of this intermediate portion 111 is wider than the width of the axis 21 of the screw body 2. Also, in four corners of such intermediate portion 111, slits 111a are respectively formed along the axis line x of the above-mentioned leg portion. The intermediate portion 111 is divided into four sheets of plate pieces 111b by such slits 111a ranged between one tube end 111c located on an end portion 110 side of such intermediate portion 111, and the other tube end 111d located on a connected side to the head portion 10. The through-bore 10a of the head portion 10 of the grommet main body 1 has a rectangular bore following the outline of the inside of such intermediate portion 111. Incidentally, in the illustrated examples, branching split grooves 10e, communicated with a pair of corner portions which is located in an opposed position of this through-bore 10a and continuing into a formation position of the above-mentioned circling rising portion 10b, are formed in such head portion 10. (Fig. 3(d))

The end portion 110 comprises a through bore 110a of the axis 21 of the screw body 2 on the inside. In the illustrated examples, in this through bore 110a, a female screw 110b corresponding to the male screw 21a of the axis 21 of the screw body 2 is formed. In the illustrated examples, the screw body 2 positions an axis end portion 21c side thereof inside the end portion 110 by engaging the male screw 21a with the female screw 110b of this end portion 110 in a state before the above-mentioned screw advancing operation. Thus, if the female screw 110b is formed on an inside of the end portion 110, due to the above-mentioned screw advancing operation, the end portion 110 can be smoothly inserted into an inside of the intermediate portion 111. Aside from the illustrated examples, in such a case when such female screw 110b is not formed on the inside of the end portion 110, without combining the screw body 2 to the grommet main body 1 beforehand, from a state wherein the leg portion 11 of the grommet main body 1 is inserted into the attachment bores Pa of the objects P, the screw body 2 as a tapping screw is screwed into this grommet main body 1. Due to the screwing (screw advancing) of this screw body 2, the end portion 110 is inserted into the inside of the intermediate portion 111, so that the fastening to the objects P due to the expansion of this intermediate portion 111 is carried out.

In the illustrated examples, an outer surface of the end portion 110 is structured so as to have an approximately square outline in a cross-sectional surface in the direction orthogonal to the axis line x of the leg portion 11, even in any position of this axis line direction. Specifically, the end portion 110 comprises outer surfaces 110c corresponding to the respective four sheets of plate pieces 111b of the intermediate portion 111 divided by the above-mentioned slits 111a. Also, the end portion 110 includes one tube end 110e comprising an approximately equal width to the width of the inside of the intermediate portion 111 and inserted into the inside of one tube end 111c of this intermediate portion 111. Also, the end portion 110 includes the other tube end 110f comprising an approximately equal width to the width of the outside of the intermediate portion 111. In the illustrated examples, such end portion 110 and the intermediate portion 111 are connected to each other through thin-walled connecting portions 112 provided between the outer surfaces 110c of one tube end 110e of the end portion 110, and an inner surface 111f of one tube end 111c of the intermediate portion 111. (Fig. 4) Also, in the illustrated examples, on the outside of the end portion 110, guide portions 110g having a rib shape along the axis line x of the leg portion 11 are respectively formed in a pair of corner portions which is located in an opposed position of four corner portions of the end portion 110. One end of the guide portions 110g is positioned on the head portion 10 side of the grommet main body 1 rather than one tube end 110e of the end portion 110, and in the state before the above-mentioned screw advancing operation, one end of the guide portions 110g is inserted into the slits 111a of the intermediate portion 111. Then, when the end portion 110 is moved in a direction of being further inserted into the inside of the intermediate portion 111 due to such screw advancing operation, i.e., when the end portion 110 is moved toward the head portion 10 side of the grommet main body 1, the guide portions 110g are guided by the slits 111a, and moved along the slits 111a.

Then, in the present embodiment, at a time of the above-mentioned expansion of the intermediate portion 111 of the leg portion 11 of the grommet main body 1, the outer surfaces 110c of the end portion 110 contacting the inner surface 111f of an expanded portion 111e of this intermediate portion 111 are structured so as to have a shape following the inner surface 111f of this expanded portion 111e. Specifically, at the time of the expansion of the intermediate portion 111 of such leg portion 11, the outer surfaces 110c of the end portion 110 contacting the inner surface 111f of the expanded portion 111e of this intermediate portion 111 have curved surfaces 110d having a curve following the curve of the inner surface of this expanded portion 111e. (Fig. 5) In the illustrated examples, four outer surfaces 110c of the end portion 110 respectively include the curved surfaces 110d curved in a direction in which the end portion 110 is gradually widened as going toward the other tube end 110f side from one tube end 110e side thereof.

After the leg portion 11 is inserted into the attachment bores Pa of the objects P comprising the attachment bores Pa for the leg portion 11 of the screw grommet G, when the screw advancing operation of the screw body 2 is carried out, i.e., when the screw body 2 is operated in a direction wherein the screw body 2 is inserted further than the head portion 10 side of the grommet main body 1 while rotating, the end portion 110 is moved in a direction approaching the head portion 10 side. Accordingly, the intermediate portion 111 is expanded by being pushed from the inside by the end portion 110 which is moved in this manner. Thereby, the screw grommet G is fastened to the objects P by sandwiching the objects P between the head portion 10 thereof and the expanded portion 111e. In this fastened state, since the outer surfaces 110c of the end portion 110 have the shape following the inner surface 111f of the expanded portion 111e of the intermediate portion 111, both surfaces 110c, 111f can be contacted with the surfaces along a direction of the axis line x of the leg portion 11 so as not to produce a gap between both surfaces 110c, 111f as much as possible. (Fig. 5) Thereby, even in such a case that a force in a direction intersecting with such axis line x is acted on the objects P, typically, even when the force in the above-mentioned direction is acted on one of the two objects P, P or both of the objects P, P which are fastened to each other through the screw grommet G, one of the objects P or both of the objects P can be prevented from moving in the direction of this force. Also, the fastening with little wobbling of such objects P can be carried out. In the illustrated examples, the axis base portion 21b of the axis 21 of the screw body 2 is structured slightly wider compared to a formation portion of the male screw 21a, and in the above-mentioned fastened state, a gap between the intermediate portion 111 and this axis base portion 21b is minimized so as to contribute to the reduction of the above-mentioned wobbling.

In the illustrated examples, first, the leg portion 11 of the grommet main body 1 is inserted into the attachment bores Pa of the objects P having a rectangular shape following the outline of the outside of this leg portion 11. (Fig. 4) Next, when the screw advancing operation of the screw body 2 is carried out, the screw head 20 thereof is caught in the head portion 10 of the grommet main body 1, so that the screw body 2 itself does not move in a direction of being inserted further than the head portion 10. However, the end portion 110 receives a moving force in a direction approaching the head portion 10. Due to the above-mentioned guide portions 110g, the associated turning of the end portion 110 with the screw body 2 is prevented, so that only the movement by being guided by the above-mentioned slits 111a is allowed. Accordingly, the thin-walled connecting portions 112 are broken due to the screw advancing operation of the screw body 2, and the end portion 110 is gradually moved toward the head portion 10 side, so that the intermediate portion 111 is expanded. (Fig. 5)

The whole grommet main body 1 may not be made of plastic, and such end portion 110 may be also structured by metal. In this case, the above-mentioned thin-walled connecting portions 112 connecting the end portion 110 and the intermediate portion 111 are not provided, and both portions 110, 111 are made as separate bodies. In a case wherein the end portion 110 is metallic, a condition, wherein the male screw 21a of the screw body 2 abruptly crushes the female screw 110b of the end portion 110 at a time of the above-mentioned screw advancing operation, can be prevented. Accordingly, by sufficiently moving the end portion 110 to the head portion 10 side due to such screw advancing operation, the intermediate portion 111 can be adequately expanded. Also, rigidity of the guide portions 110g formed in such end portion 110 can be enhanced. Even in a case that the grommet main body 1 is downsized, with the guide portions 110g guided by the above-mentioned slits 111a at the above-mentioned screw advancing operation, the above-mentioned associated turning of the end portion 110 can be reliably prevented.

The fastened state of the screw grommet G to such objects P can be released by the screw retracting operation of the screw body 2. When the screw retracting operation of the screw body 2 is carried out from the state of Fig. 5, since the end portion 110 is fitted into the inside of the intermediate portion 111 in a state wherein the intermediate portion 111 is expanded, the screw body 2 is gradually slipped out of the inside of the grommet main body 1. The screw body 2 is pushed into the inside of the grommet main body 1 from a state wherein the screw body 2 is screwed for retracting for a dimension in which the end portion 110 is moved to the head portion 10 side due to the above-mentioned screw advancing operation. Then, the end portion 110 falls out of the intermediate portion 111 and returns to the position before the screw advancing operation, and an expanded state of the intermediate portion 111 is released. Accordingly, the fastened state of the screw grommet G to the objects P is released.

Figs. 6 to 10 show examples comprising the blocking means 3 in the axis end portion 21c of the screw body 2 structuring the screw grommet G shown in Figs. 1 to 5. When the engagement between the screw body 2 and the end portion 110 of the leg portion 11 is released due to the screw retracting operation of the screw body 2 from the above-mentioned expanded state in this manner, the blocking means 3 prevents the end portion 110 from falling off the screw body 2. Thereby, in the examples shown in Figs. 6 to 10, the end portion 110, wherein the engagement with the screw body 2 is released due to the above-mentioned screw retracting operation, cannot fall out of the intermediate portion 111 and fall off, so that the reuse of the screw grommet G and the like cannot be interfered with.

In each example shown in Figs. 6 to 10, the axis 21 of the screw body 2 is structured longer than the example shown in Figs. 1 to 5. In the state before the above-mentioned screw advancing operation, the axis end portion 21c of the screw body 2 is projected below the other tube end 110f of the end portion 110.

Then, in a first example shown in Fig. 6, such blocking means 3 is a fitting portion 30 of a ring body formed in the axis end portion 21c of the screw body 2 projected as mentioned above. Specifically, in this first example, a circling groove 30a is formed in the axis end portion 21c of the screw body 2 projected as mentioned above. The ring body (not shown) is fitted into the axis end portion 21c of the screw body 2 in such a way that an inner circumferential side of an E ring or an O ring is housed in this circling groove 30a. Accordingly, this ring body can prevent the end portion 110, in which the engagement with the screw body 2 is released due to the above-mentioned screw retracting operation, from falling off.

Also, in a second example shown in Fig. 7, such blocking means 3 is a press-fitting portion 31 formed in the axis end portion 21c of the screw body 2. Specifically, in this second example, the axis end portion 21c of the screw body 2 projected as mentioned above is press-fitted, i.e., crushed, and an expanded diameter portion 31a can be formed in this axis end portion 21c. The expanded diameter portion 31a formed in this manner can prevent the end portion 110, in which the engagement with the screw body 2 is released due to the above-mentioned screw retracting operation, from falling off.

Also, in a third example shown in Fig. 8, such blocking means 3 is latch-engaging pieces 32 which are formed in the axis end portion 21c of the screw body 2. Also, the latch-engaging pieces 32 allow the screw body 2 to be screwed in by flexing at a time when the screw body 2 is screwed into the end portion 110 of the leg portion 11. Due to a flexible returning at a screwed-in position where the axis end portion 21c of the screw body 2 has fallen out of this end portion 110, the latch-engaging pieces 32 are latched and engaged with this end portion 110. Specifically, in this third example, the axis end portion 21c of the screw body 2 is the latch-engaging pieces 32 which are divided into two to right and left and can be flexed inwardly and deformed. Also, in free ends of the latch-engaging pieces 32, projected portions 32a projecting outwardly are formed, and a size between projecting ends of a right-and-left pair of projected portions 32a, 32a is made slightly larger than a bore diameter of the through bore 110a of the end portion 110. Then, when the screw body 2 is assembled to the grommet main body 1, a pair of latch-engaging pieces 32, 32 is flexed while contacting the projected portions 32a with a bore inner surface of the through bore 110a of the end portion 110, so that the axis 21 of the screw body 2 is allowed to be screwed into this through bore 110a. Thereby, in this third example, the latch-engaging pieces 32 formed in this manner can prevent the end portion 110, in which the engagement with the screw body 2 is released due to the above-mentioned screw retracting operation, from falling off.

Also, in a fourth example shown in Fig. 9, such blocking means 3 is an implanting portion 33 for a retaining pin J formed in the axis end portion 21c of the screw body 2. Specifically, in this fourth example, a through-bore 33a in a direction orthogonal to an axis line of the axis 21 of the screw body 2 is formed in the axis end portion 21c of the screw body 2 projected as mentioned above. The pin J is implanted into this through-bore 33a, so that this pin J can prevent the end portion 110, in which the engagement with the screw body 2 is released due to the above-mentioned screw retracting operation, from falling off.

Also, Fig. 10 shows an example comprising the inhibiting means 4 in the grommet main body 1 of the screw grommet G shown in Figs. 1 to 5. The inhibiting means 4 inhibits a screw retracting dimension of the screw retracting operation of the screw body 2 from the above-mentioned expanded state within a range in which the engagement between this screw body 2 and the end portion 110 of the leg portion 11 cannot be released. In the example shown in this Fig. 10, a rising dimension of the circling rising portion 10b in the head portion 10 of the grommet main body 1 is structured larger than a thickness dimension of the screw head 20 of the screw body 2. Also, abutting portions 10d forming a projecting shape are formed on an entrance 10c side of this circling rising portion 10b, and abut against the head portion 10 of the screw body 2 at a predetermined screw retracting position of the screw body 2. Specifically, in the example shown in this Fig. 10, the screw body 2 is assembled to the grommet main body 1 by screwing the axis 21 into the leg portion 11 such that the screw head 20 thereof is inserted further than the above-mentioned abutting portions 10d while elastically deforming a circling rising portion 10b side. Then, from this assembled state, due to the above-mentioned screw advancing operation, the end portion 110 is moved to the head portion 10 side, so that the intermediate portion 111 can be expanded. Then, when the screw retracting operation of the screw body 2 is carried out from this expanded state, the screw body 2 is prevented from falling out of the inside of the grommet main body 1 due to this screw retracting operation at a position where the above-mentioned abutting portions 10d abut against the screw head 20 thereof. At this time, the screw body 2 cannot fall out of the end portion 110. Thereby, even in the example shown in this Fig. 10, the end portion 110, wherein the engagement with the screw body 2 is released due to the above-mentioned screw retracting operation, cannot fall out of the intermediate portion 111 and fall off, so that the reuse of the screw grommet G and the like cannot be interfered with.
Incidentally, all contents of the specifications, claims, drawings, and abstracts of Japanese Patent Applications No. 2008-185116 filed on July 16, 2008 and No. 2009-66797 filed on March 18, 2009 are cited in their entireties herein and are incorporated as a disclosure of the specification of the present invention.

## Claims

1. A screw grommet, comprising:
a head portion, and
a leg portion having an end portion which is moved to a head portion side due to a screw advancing operation of a screw body inserted from the head portion side;
wherein the screw grommet is structured so as to expand an intermediate portion by inserting the end portion, which is moved to the head portion side, into an inside of the intermediate portion of the leg portion between the end portion and the head portion, and
an outer surface of the end portion contacting an inner surface of an expanded portion of the intermediate portion is structured so as to have a shape following the inner surface of this expanded portion at a time of the expansion.

2. A screw grommet according to claim 1, wherein the outer surface of the end portion contacting the inner surface of the expanded portion of the intermediate portion at the time of the expansion of the intermediate portion of the leg portion has a curved surface having a curvature following the curvature of the inner surface of this expanded portion.

3. A screw grommet according to claim 1 or 2, wherein the intermediate portion of the leg portion is divided into multiple piece portions by slits along an axis line direction of the leg portion, and guide portions which are inserted into the slits and guided are formed in the end portion.

4. A screw grommet according to any one of claims 1 to 3, wherein a female screw corresponding to a male screw of the screw body is formed on an inside of the end portion.
